Europäisches Patentamt

(19) European Patent Office

Office européen des brevets

(11) Veröffentlichungsnummer : **0 059 863**
**B1**

(12) # EUROPÄISCHE PATENTSCHRIFT

(45) Veröffentlichungstag der Patentschrift :
**15.05.85**

(21) Anmeldenummer : **82101214.3**

(22) Anmeldetag : **18.02.82**

(51) Int. Cl.⁴ : **G 21 C 17/02, G 01 N 7/00**

(54) **Einrichtung zur Ermittlung des Sättigungszustandes bzw. des Abstandes zur Sättigung einer in einem geschlossenen System strömenden erhitzten und unter Druck stehenden Flüssigkeit.**

(30) Priorität : **07.03.81 DE 3108763**

(43) Veröffentlichungstag der Anmeldung :
**15.09.82 Patentblatt 82/37**

(45) Bekanntmachung des Hinweises auf die Patenterteilung : **15.05.85 Patentblatt 85/20**

(84) Benannte Vertragsstaaten :
**AT CH DE FR GB IT LI**

(56) Entgegenhaltungen :
**DE-A- 1 915 172**
**DE-A- 2 048 629**
**GB-A- 953 460**
**US-A- 3 263 491**

(73) Patentinhaber : **BROWN BOVERI REAKTOR GmbH**
**Dudenstrasse 44**
**D-6800 Mannheim 1 (DE)**

(72) Erfinder : **Day, Bobby L.**
**Haydnstrasse 22**
**D-6909 Walldorf (DE)**

(74) Vertreter : **Dahlmann, Gerhard, Dipl.-Ing. et al**
**c/o Brown Boveri & Cie., AG Zentralbereich ZPT/P**
**Postfach 351**
**D-6800 Mannheim (DE)**

## Beschreibung

Die Erfindung betrifft eine Einrichtung zur Ermittlung des Sättigungszustandes bzw. des Abstandes zur Sättigung einer in einem geschlossenen System strömenden erhitzten und unter Druck stehenden Flüssigkeit.

Die Sättigung in derartigen Flüssigkeiten stellt sich bei bestimmten Druck- und Temperaturbedingungen ein. Es gibt viele Anwendungsbeispiele, wo es unumgänglich ist über den Sättigungszustand bzw. den Abstand zur Sättigung von Flüssigkeiten genau Bescheid zu wissen. Oft ist es jedoch schwierig, die dafür erforderlichen genauen Druck- und Temperaturwerte zu bestimmen. Ein solches Anwendungsbeispiel ist das Primärkühlsystem einer Druckwasserreaktoranlage, das einen Druck von ca. 160 bar und eine Temperatur von ca. 300 °C aufweist. Bei einer derartigen Anlage wird seither der Sättigungszustand bzw. der Abstand zur Sättigung durch Auswertung der Temperatur- und Druckwerte der zu überwachenden Flüssigkeit ermittelt. Dazu sind Temperaturmeßgeräte für einen Bereich von 150°-360 °C und Druckmeßgeräte für einen Bereich von 10-175 bar erforderlich. Aufgrund der großen Meßbereiche, die von den Geräten beherrscht werden müssen und durch die Verwendung unterschiedlicher Meßarten sind Ungenauigkeiten der ausgewerteten Ergebnisse nicht zu vermeiden.

Es ist daher die Aufgabe der Erfindung eine zuverlässig arbeitende Einrichtung zur Ermittlung des Sättigungszustandes bzw. des Abstandes zur Sättigung einer Flüssigkeit anzugeben, deren Meßfehlerbandbreite geringer ist.

Gelöst wird diese Aufgabe erfindungsgemäß dadurch, daß eine erste Meßkammer eines Differenzdruck-Meßumformers über eine erste Leitung mit der Flüssigkeit verbunden ist, daß von einer zweiten Meßkammer eine zweite Meßleitung wegführt, deren geschlossenes Ende in die Flüssigkeit hineinragt, daß die zweite Meßleitung die im System strömende Flüssigkeit enthält und daß die Flüssigkeitsfüllung der zweiten Meßleitung einen Freiraum zur Aufnahme eines sich bildenden Dampfpolsters beläßt.

Aufgrund der in der Flüssigkeit herrschenden Temperatur bildet sich in dem Freiraum der Meßleitung ein Dampfpolster. Dabei baut sich an der Berührungsstelle zwischen Dampfpolster und Flüssigkeitsfüllung ein Druck auf, der dem Sättigungsdruck der Flüssigkeit bei der vorliegenden Temperatur entspricht. Der sich einstellende Differenzwert gibt Aufschluß über den Abstand zur beginnenden Sättigung der zu überprüfenden Flüssigkeit. Durch die Verwendung nur einer Meßart, nämlich der Druckmessung, werden nur Druckmeßwerte miteinander verglichen, so daß eine Verringerung der Meßfehlerbandbreite eintritt. Das enge Nebeneinanderliegen des Sättigungs- und Flüssigkeitsdruckes bringt eine weitere Erhöhung der Meßgenauigkeit.

Vorzugsweise weist das geschlossene Ende der Meßleitung einen größeren Meßwert auf, als der restliche Teil dieser Meßleitung. Damit wird die Wärmeübergangsfläche vergrößert und ein schneller Wärmeübergang auf die im Endbereich der Meßleitung angeordnete Flüssigkeit sichergestellt.

Für im Durchmesser kleinere Rohrleitungen zur Führung der zu überprüfenden Flüssigkeit wird eine andere erfindungsgemäße Lösung vorgeschlagen die dadurch gekennzeichnet ist, daß eine erste Meßkammer eines Differenzdruck-Meßumformers über eine erste Meßleitung mit der Flüssigkeit verbunden ist, daß von einer zweiten Meßkammer eine zweite Meßleitung wegführt, deren geschlossenes Ende von einer die Flüssigkeit führenden Rohrleitung durchsetzt ist, daß die zweite Meßleitung die im System strömende Flüssigkeit enthält und daß die Flüssigkeitsfüllung der zweiten Meßleitung einen Freiraum zur Aufnahme eines sich bildenden Dampfpolsters beläßt.

Zur Verbesserung der Wärmeleitfähigkeit dieser Ausbildung sind innerhalb des geschlossenen Endes von der Rohrleitung auskragende Lamellen vorgesehen.

Aus der GB-A 953 460 ist zwar die Verwendung eines Differenzdruck-Meßumformers und einer Bourdon-Röhre zur Übertragung des Dampfdruckes einer Standardflüssigkeit bekannt. Dort wird jedoch lediglich die chemische Zusammensetzung einer Flüssigkeit bestimmt. Hierzu ist es erforderlich, den Dampfdruck der zu überprüfenden Flüssigkeit durch den Einsatz einer Injektorpumpe kontinuierlich zu bestimmen.

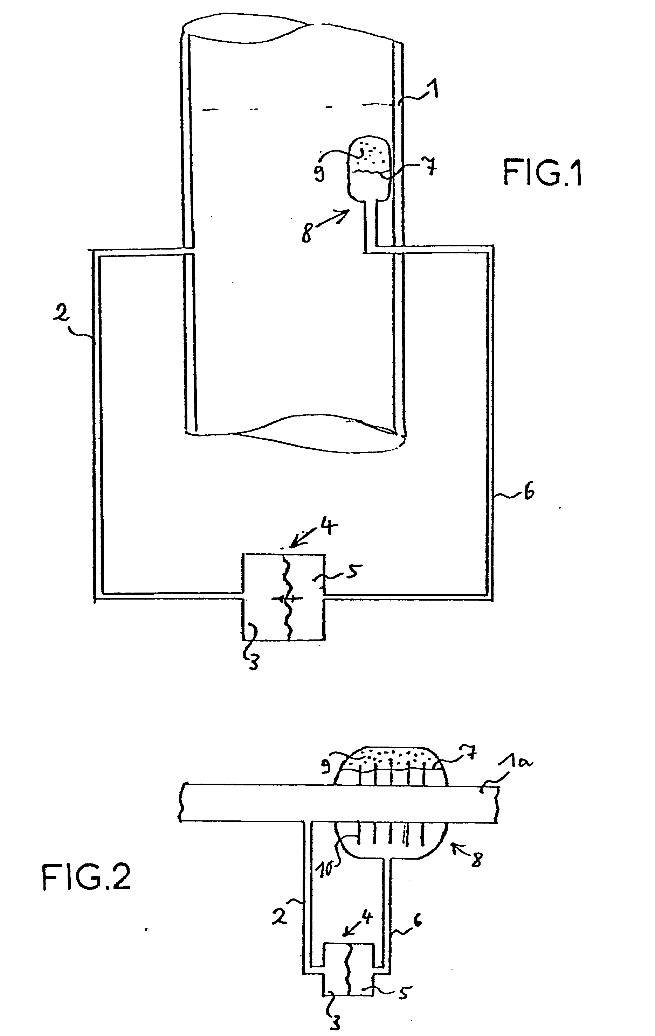

Anhand der schematischen Zeichnung Fig. 1 und 2 werden zwei Ausführungsbeispiele der Einrichtung beschrieben.

Gemäß der Fig. 1 ist an einer Primärkühlmittelleitung 1 einer nicht weiter dargestellten Druckwasserkernreaktoranlage eine Meßleitung 2 angeschlossen, die zu einer Meßkammer 3 eines Differenzdruck-Meßumformers 4 führt. Die Meßleitung 2 stellt somit eine unmittelbare Verbindung des Primärkühlmittels mit dem Meßumformer 4 dar, so daß in der Meßkammer 3 der Druck des in der Leitung 1 strömenden Mediums herrscht. Eine mit einer Meßkammer 5 verbundene Meßleitung 6 ist nach vorhergehender Evakuierung bis zur Linie 7 mit Wasser gefüllt, so daß in dem topfförmig ausgebildeten geschlossenen Ende 8 der Meßleitung 6 ein Freiraum 9 gebildet ist, der so groß ausgelegt ist, daß er nach erfolgter Wärmedehnung des in der geschlossenen Meßleitung befindlichen Wassers noch Platz für ein Dampfpolster aufweist. Mit einem Teil ihres wassergefüllten Bereichs ragt die Meßleitung 6 in den Flüssigkeitsstrom der Leitung 1 hinein, damit das in diesem Bereich befindliche Wasser die ca. 300 °C aufweisende Temperatur des Primärkühlmittels annimmt. Daraufhin bildet sich ein Dampfpolster in dem Freiraum. Der im Bereich des geschlossenen Endes 8 größer als im übrigen Verlauf der Meßleitung 6 ausgeführte Querschnitt sorgt für einen schnellen Wärmeübergang auf das darin eingeschlossene Wasser und vermeidet dadurch zeitverzögerte Meßergebnisse. Der an der Berührungsfläche zwischen Dampfpolster und Wasser sich aufbauende Druck ist der Sättigungsdruck dieses Wassers bei der Temperatur des Primärkühlmittels. Er wird über die Wassersäule der Meßleitung 6 zur Meßkammer 5 übertragen. Der ermittelte Differenzdruck zwischen den Meßkammern 2 und 5 wird in bekannter Weise angezeigt und dient als Maß für den Sättigungszustand bzw. den Abstand zur Sättigung des Primärkühlmittels. Es wird also der der Primärkühlmitteltemperatur entsprechende Sättigungsdruck von Wasser unter indirektem Kontakt mit dem Primärkühlmittel ermittelt und mit dem Primärkühlmitteldruck verglichen. Der Sättigungsdruck des Primärkühlmittels ist erreicht, wenn der tatsächliche Druck des Kühlmittels (Meßkammer 3) gleich dem in der Meßkammer 5 sich aufbauenden Druck ist. Die Ermittlung des Sättigungsabstandes stellt sicher, daß bereits vor dem Erreichen des Sättigungszustandes und zwar mit zuverlässigen Daten, über die Warte der Kernreaktoranlage eine Änderung der Temperatur, des Druckes oder anderer Kriterien verfügt wird.

Für Rohrleitungen kleineren Querschnitts (bis ca. 25 mm Durchmesser) eignet sich die in Fig. 2 beschriebene Ausbildung. Hier ist die zu überwachende Rohrleitung 1a durch den Innenraum des einen größeren Querschnitt als der restliche Leitungsteil der Meßleitung 6 aufweisenden geschlossenen Endes 8 geführt. Von der Flüssigkeitsleitung 1a auskragenden Lamellen 10 erleichtern den Wärmeübergang von dem in der Flüssigkeitsleitung strömenden Medium auf den das gleiche Medium beinhaltenden geschlossenen Endbereich der Meßleitung 6. Auch hier bildet sich an der Berührungsfläche 7 zwischen dem Dampfpolster 9 und der angrenzenden Flüssigkeitssäule ein Druck, der dem Sättigungsdruck der in der Rohrleitung 1a strömenden Flüssigkeit entspricht. Der Sättigungsdruck wird in der gleichen Weise wie in der Fig. 1 beschrieben ermittelt und mit dem tatsächlichen Flüssigkeitsdruck in Rohrleitung 1a verglichen.

**Patentansprüche**

1. Einrichtung zur Ermittlung des Sättigungszustandes bzw. des Abstandes zur Sättigung einer in einem geschlossenen System strömenden erhitzen und unter Druck stehenden Flüssigkeit, dadurch gekennzeichnet, daß eine erste Meßkammer (3) eines Differenzdruck-Meßumformers (4) über eine erste Meßleitung (2) mit der Flüssigkeit verbunden ist, daß von einer zweiten Meßkammer (5) eine zweite Meßleitung (6) wegführt, deren geschlossenes Ende (8) in die Flüssigkeit hineinragt, daß die zweite Meßleitung die im System strömende Flüssigkeit enthält und daß die Flüssigkeitsfüllung der zweiten Meßleitung (6) einen Freiraum (9) zur Aufnahme eines sich bildenden Dampfpolster beläßt.

2. Einrichtung nach Anspruch 1, dadurch gekennzeichnet, daß das geschlossene Ende (8) der Meßleitung (6) einen größeren Querschnitt aufweist als der restliche Teil der Meßleitung (6).

3. Einrichtung zur Ermittlung des Sättigungszustandes bzw. des Abstandes zur Sättigung einer in einem geschlossenen System strömenden erhitzten und unter Druck stehenden Flüssigkeit, dadurch gekennzeichnet, daß eine erste Meßkammer (3) eines Differenzdruck-Meßumformers (4) über eine erste Meßleitung (2) mit der Flüssigkeit verbunden ist, daß von einer zweiten Meßkammer (5) eine zweite Meßleitung (6) wegführt, deren geschlossenes Ende (8) von einer die Flüssigkeit führenden Rohrleitung (1a) durchsetzt ist, daß die zweite Meßleitung (6) die im System strömende Flüssigkeit enthält und daß die Flüssigkeitsfüllung der zweiten Meßleitung (6) einen Freiraum (9) zur Aufnahme eines sich bildenden Dampfpolsters beläßt.

4. Einrichtung nach Anspruch 3, dadurch gekennzeichnet, daß innerhalb des geschlossenen Endes (8) von der Rohrleitung (1a) auskragende Lamellen zur Verbesserung der Wärmeleitfähigkeit vorgesehen sind.

**Claims**

1. Device for determining the state of saturation, or the distance from saturation, of a heated liquid flowing in a closed system and pressurised, characterised in that a first measurement chamber (3) of a differential pressure transducer (4) is connected *via* a first measuring line (2) to the liquid, that a second measuring line (6), the closed end (8) of which protrudes into the liquid, leads away from a second measurement chamber (5), that the second measuring line contains the liquid flowing in the system, and that the liquid filling of the second measuring line (6) leaves a free space (9) for receiving a vapour pocket being formed.

2. Device according to Claim 1, characterised in that the closed end (8) of the measuring line (6) has a larger cross-section than the remaining part of the measuring line (6).

3. Device for determining the state of saturation, or the distance from saturation, of a heated liquid flowing in a closed system and pressurised, characterised in that a first measurement chamber (3) of a differential pressure transducer (4) is connected *via* a first measuring line (2) to the liquid, that a second measuring line (6), through the closed end (8) of which a pipe (1a) carrying the liquid passes, leads away from a second measurement chamber (5), that the second measuring line (6) contains the liquid flowing in the system, and that the liquid filling of the second measuring line (6) leaves a free space (9) for receiving a vapour pocket being formed.

4. Device according to Claim 3, characterised in that, within the closed end (8), fins projecting from the pipe (1a) are provided for improving the heat conductivity.

**Revendications**

1. Dispositif pour détecter l'état de saturation ou la distance par rapport à la saturation d'un liquide s'écoulant dans un système fermé, et qui est chauffé et se trouve sous pression, caractérisé en ce qu'une première chambre de mesure (3) d'un convertisseur de mesure (4) de pression différentielle est reliée par une première conduite de mesure (2) au liquide, en ce qu'une deuxième conduite de mesure (6) s'écarte d'une deuxième chambre de mesure (5), l'extrémité fermée (8) de la deuxième conduite de mesure pénétrant dans le liquide, en ce que la deuxième conduite de mesure contient le liquide s'écoulant dans le système, et en ce que le remplissage de liquide de la deuxième conduite de mesure (6) laisse un espace libre (9) pour recevoir un coussin de vapeur qui se forme.

2. Dispositif selon la revendication 1, caractérisé en ce que l'extrémité fermée (8) de la conduite de mesure (6) présente une section transversale plus grande que la partie restante de la conduite de mesure (6).

3. Dispositif pour détecter l'état de saturation ou la distance par rapport à la saturation d'un liquide s'écoulant dans un système fermé et qui est chauffé et se trouve sous pression, caractérisé en ce qu'une première chambre de mesure (3) d'un convertisseur de mesure (4) de pression différentielle est reliée par l'intermédiaire d'une première conduite de mesure (2) au liquide, en ce qu'une deuxième conduite de mesure (6) s'écarte d'une deuxième chambre de mesure (5), l'extrémité fermée (8) de la deuxième conduite de mesure étant traversée par une conduite tubulaire (1a) conduisant le liquide, en ce que la deuxième conduite de mesure (6) contient le liquide s'écoulant dans le système et en ce que le remplissage de liquide de la deuxième conduite de mesure (6) laisse un espace libre (9) pour recevoir un coussin de vapeur qui se forme.

4. Dispositif selon la revendication 3, caractérisé en ce que, à l'intérieur de l'extrémité fermée (8) de la conduite tubulaire (1a), on prévoit des lamelles en saillie pour améliorer la conductibilité thermique.

0 059 863

FIG.1

FIG.2